# EUROPEAN PATENT SPECIFICATION

(11) **EP 4 527 212 B1**
(45) Date of publication and mention of the grant of the patent: **24.06.2026**
(21) Application number: 24201516.2
(22) Date of filing: 20.09.2024
(51) Int. Cl.: A23P 20/10, A23L 19/00, A23P 20/18

(54) **METHOD FOR PRODUCING OVEN-BAKEABLE FROZEN VEGETABLES AND/OR FRUITS**
VERFAHREN ZUR HERSTELLUNG VON OFENBACKBAREM GEFRORENEM GEMÜSE UND/ODER OBST
PROCÉDÉ DE PRODUCTION DE LÉGUMES ET/OU DE FRUITS CONGELÉS POUVANT ÊTRE CUITS AU FOUR

(30) Priority: 21.09.2023 BE 202305780
(43) Date of publication of application: 26.03.2025
(73) Proprietor: Darta nv, 8850 Ardooie (BE)
(72) Inventor: Talpe, Andries, 8850 Ardooie (BE)
(74) Representative: Brantsandpatents bv

(56) References cited:
- WO-A1-02/49461
- WO-A1-2011/101664
- WO-A1-2019/129927
- US-A- 3 653 924

## Description

### FIELD OF THE INVENTION

The present invention pertains to a method for producing oven-bakeable frozen vegetables and/or fruits. This method involves freezing pre-cut vegetables and/or fruits and then coating them with a batter composition using an enrober. The batter composition comprises shea butter.

### BACKGROUND

In today's market, a variety of frozen vegetables, including parsnips, onions, broccoli, and mushrooms, require baking in an oven at 220°C for approximately 25 to 35 minutes before they can be consumed. Achieving optimal crispiness upon removal from the oven is crucial for these oven-bakeable products.

Traditionally, to attain the desired crispiness, these vegetables are coated with a batter, which typically consists of a mixture of flour and water, sometimes supplemented with egg yolk and/or seasonings. Following blanching, the batter layer is affixed to the vegetables through one or two rounds of frying at temperatures ranging from 175°C to 180°C. The frying process also contributes to the development of a crunchy product. One particular embodiment of such batter, often referred to as tempura batter, is described in international patent publication WO 97/29653. Another type of batter for food products is for instance described in WO2019129927,
After the batter layer is applied, the vegetables pass through a freezing tunnel. Subsequently, they undergo an additional oil bath to secure the batter layer before being packaged.

However, the frying process often results in a loss of the vegetables' inherent flavor, and the products frequently contain high levels of saturated fats.

In addition to this primary method described, an alternative process was presented in BE1021409. In this variation, the liquid batter layer is applied to the frozen vegetables and/or fruits by alternately spraying cryogenic gas and liquid batter onto the product. This approach was said to enhance adhesion and to result in a batter layer comprising water, oil, and one or more types of starch, with a particular preference for tapioca starch. As type of oil, olive oil was preferred, although sunflower oil or a blend of olive and sunflower oil (or rapeseed oil) could be utilized as well. This alternative method ensured adhesion and reduced calorie content while preserving the vegetables' inherent flavors.

Although more healthy, the second method has the disadvantage of a less appealing look and feel. It was clear that the customer actually preferred the appearance and taste of a deep-fried crispy vegetable as obtained by the first method, while still maintaining the vegetables' inherent flavors and having a more healthy calorie-reduced option.

A further method of providing a coating on food products is by means of an enrober as for instance described for preparing glazed food products as in US3653924. In this method, the coating is applied at a temperature of around 185 °F, which is approximately 85 °C. While this temperature is lower compared to the 175-180 °C used in the traditional frying process as described above, it may still negatively impact the vegetables' inherent flavor. Furthermore, 85 °C is a temperature that can still pose safety concerns, as it is associated with burns.

There thus remained a need in the art for a method of producing oven-bakeable vegetables and/or fruits.

### SUMMARY OF THE INVENTION

The present invention provides a method to overcome at least part these disadvantages. The method involves freezing pre-cut vegetables and/or fruits and then passing them through an enrober, where they are coated with a batter composition according to claim 1. This batter composition contains one or more types of starch or flour and a fat composition that includes shea butter. Importantly, the temperature of the batter composition during the coating process is controlled, ensuring it remains between 38°C and 55°C.

This method results in oven-bakeable vegetables and/or fruits that are crispy when baked without the need for deep frying, while preserving their natural flavours. The controlled temperature ensures proper adhesion of the coating to the frozen vegetables and/or fruits, as the coating solidifies onto the frozen vegetables and/or fruits immediately.

The use of shea butter in the fat composition offers several advantages, including a healthier fat profile, trans-fat-free characteristics, higher unsaturated fats content compared to palm oil, and environmental sustainability. Shea butter also has a high smoke point, making it suitable for high-temperature cooking methods like oven-baking.

Preferred embodiments of the method are described in any one of the claims 2 to 10.

The present invention also provides an oven-bakeable vegetable and/or fruit provided with a coating layer according to claim 11. Preferred embodiments of the oven bakeable vegetable and/or fruit are described in any one of the claims 12 to 14.

### DETAILED DESCRIPTION OF THE INVENTION

A method for producing oven-bakeable frozen vegetables and/or fruits according to the present invention includes the following steps: a) freezing pre-cut vegetables and/or fruits; and b) passing the frozen vegetables and/or fruits through an enrober, where they are coated with a batter composition comprising one or more types of starch or flour, and a fat composition comprising at least shea butter. The batter coating composition in step b) is at a temperature of at least 38 °C and a maximum of 55 °C.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination, always inside the scope of the claims.

In a first aspect, the invention provides a method for producing oven-bakeable frozen vegetables and/or fruits. The method comprising the steps of:
a) freezing pre-cut vegetables and/or fruits, and
b) passing the frozen vegetables and/or fruits through a curtain of batter coating composition produced by means of an enrober, thereby providing a coating layer on the frozen vegetables and/or fruits,
wherein the batter coating composition comprises one or more types of starch or flour and a fat composition comprising shea butter, and wherein the batter coating composition in step b) is at a temperature of at least 38 °C and a maximum of 55 °C.

The inventors have unexpectedly observed that this method is particularly effective in providing oven-bakeable vegetables and/or fruits that are crunchy or crispy when baked in a traditional oven, without the need for frying in a deep fryer or in frying oil, and while preserving the typical taste of the vegetable or fruit.

The method allows the vegetables and/or fruits to be fully or at least mostly coated with the batter coating composition that is liquid at temperatures of between 38 °C and 55 °C, and that immediately solidifies when coming into contact with the frozen vegetables and/or fruits. This makes sure the batter coating composition adheres well to the vegetables and/or fruits, and avoids the composition to drip off of the vegetables and/or fruits thereby avoiding the composition to be lost as a waste product.

The temperature of between 38 °C and 55 °C is particularly suitable, as at lower temperatures the batter coating composition is not liquid anymore i.e. it solidifies before coming into contact with the frozen fruits and/or vegetables, and at higher temperatures the batter coating composition starts separating and/or the solidification of the composition when coming into contact with the frozen fruits takes unnecessarily long.

The batter coating composition comprises one or more types of starch or flour, which facilitates the adherence of the fat composition comprising shea butter to the vegetables and/or fruits. Non-limiting examples of types of starch or flour are corn starch, potato starch, tapioca starch, tapioca flour, rice starch, rice flour, wheat starch, arrowroot starch, arrowroot flour, sweet potato starch, cassava starch, sorghum starch, sorghum flour, chickpea flour (besan), green banana flour, oat starch, barley starch, rye starch, millet starch, buckwheat flour, amaranth flour, or wheat flour.

The batter coating composition comprises a fat composition comprising shea butter. The fat composition preferably comprises at least 90 % of shea butter, preferably at least 91 %, more preferably at least 92 %, more preferably at least 93 %, more preferably at least 94 %, more preferably at least 95 %, more preferably at least 96 %, more preferably at least 97 %, more preferably at least 98 %, most preferably at least 99 %, and even up to 100 % of shea butter.

Shea butter is a fat with multiple benefits over other types of fats and oils when used in baking or cooking of food. The benefits include but are not limited to it containing a higher proportion of unsaturated fats compared to palm oil which is frequently used for cooking. It is also naturally trans-fat-free, while some hydrogenated oils, like palm oil, may contain trans fats. Unsaturated and trans-fat free fats make a healthier option for cooking. Shea butter further contains vitamins such as A and E, as well as minerals like magnesium and calcium, which can provide some nutritional value to dishes. Moreover, it has a relatively high smoke point (around 190°C), which makes it suitable for high-temperature cooking methods like oven-baking without breaking down and producing harmful compounds. Finally, shea butter is often sourced from shea trees in West Africa and is considered more environmentally sustainable than for instance palm oil, which has been associated with deforestation and habitat destruction.

In an embodiment of the invention, the batter coating composition in step b) is at a temperature of at least 40 °C and a maximum of 50 °C. This temperature provides safer margins avoiding early solidification at the lower end, and separating and/or slow solidification at the higher end of the range.

In a preferred embodiment of the invention, the batter coating composition has a melting point of between 36 °C and 38 °C, preferably of about 37 °C, as measured by AOCS Cc 3-25. In another of further preferred embodiment of the invention, the fat composition has a melting point of between 36 °C and 38 °C, preferably of about 37 °C, as measured by AOCS Cc 3-25.

It has been demonstrated that the batter coating composition and/or fat composition, with the specified melting point, is exceptionally advantageous in the current method. This is because it enables rapid solidification of the batter coating composition and/or fat composition within a temperature range of 38°C to 55°C when it comes into contact with the frozen vegetables and/or fruits. Furthermore, the relatively low melting point allows heating of the composition to a maximum temperature that enhances safety during the process, significantly reducing the likelihood of burn injuries, as such temperatures are not typically associated with burns.

In an embodiment, the coating layer constitutes 5 to 20 wt%, preferably 7.5 to 17,5 wt%, more preferably 10 to 15 wt% of the oven-bakeable frozen vegetables or fruits. This was shown to be sufficient to get the vegetables and/or fruits to be crunchy after oven-baking, while avoiding the vegetables and/or fruits to be too oily.

In an embodiment, the batter coating composition comprises one or more types of starch or flour and a fat composition in a ratio 1:100 to 100:1 based on the weight of the starch or flow and fat composition. The ratio will depend on the type of flour or starch and the vegetable or fruit to be coated. Non-limiting examples are: 1:100, 2:100, 3:100, 4:100, 5:100, 6:100, 7:100, 8:100, 9:100, 10:100, 11:100, 13:100, 15:100, 17:100, 19:100, 21:100, 23:100, 25:100, 27:100, 29:100, 31:100, 33:100, 35:100, 37:100, 39:100, 41:100, 43:100, 45:100, 47:100, 49:100, 51:100, 53:100, 55:100, 57:100, 59:100, 61:100, 63:100, 65:100, 67:100, 69:100, 71:100, 73:100, 75:100, 77:100, 79:100, 81:100, 83:100, 85:100, 87:100, 89:100, 91:100, 93:100, 95:100, 97:100, 99:100, 100:100 (1:1), 100:98, 100:96, 100:94, 100:92, 100:90, 100:88, 100:86, 100:84, 100:82, 100:80, 100:78, 100:76, 100:74, 100:72, 100:70, 100:68, 100:66, 100:64, 100:62, 100:60, 100:58, 100:56, 100:54, 100:52, 100:50, 100:48, 100:46, 100:44, 100:42, 100:40, 100:38, 100:36, 100:34, 100:32, 100:30, 100:28, 100:26, 100:24, 100:22, 100:20, 100:18, 100:16, 100:14, 100:12, 100:10, 100:9, 100:8, 100:7, 100:6, 100:5, 100:4, 100:3, 100:2, and 100:1; or any ranges between any of the listed ratios. Preferably, the batter coating composition is still liquid enough to provide a curtain of batter coating composition, and is viscous enough to sufficiently adhere to the vegetable or fruit before and while solidifying.

In an embodiment, the batter coating composition does not contain palm fats, hydrogenated fats, and/or lauric fats.

Excluding palm fats results in a batter composition with a healthier fat profile, as palm oil is high in saturated fats, which can have adverse health effects when consumed in excess. In addition, palm oil production has been associated with deforestation and environmental degradation. Excluding palm fats can support more sustainable and eco-friendly practices in food production. Hydrogenated fats often contain trans fats, which are considered unhealthy and have been linked to heart disease. Excluding hydrogenated fats can help create a trans-fat-free product, which is better for consumer health. Lauric fats, such as found in coconut oil, have a distinct flavor. Excluding lauric fats can provide better control over the flavor profile of the final product, ensuring it aligns with the desired taste. In addition, lauric fats can have an impact on LDL (bad) cholesterol levels when consumed in excess.

In an embodiment, the coating composition comprises a sweetener, such as honey, sugar, maple syrup, agave nectar, molasses, brown sugar, fruit juices or purees, date syrup, coconut sugar, stevia, or malt extract, or a combination thereof.

In an embodiment, the fat composition is a vegetable fat composition.

In a preferred embodiment, the fat composition comprises per 100 grams of fat, 65 g saturated fatty acids, 32 g mono unsaturated fatty acids, 3 g poly unsaturated fatty acids, and/or maximum 1.5 g trans fatty acids.

In an embodiment, the frozen vegetables and/or fruits provided of a coating layer are passed through an airflow produced by a blower. This airflow aims at blowing away any or part of the excess batter coating composition that did not immediately solidify onto the vegetables and/or fruits.

In an embodiment, the method further comprises a step c) wherein the coated vegetables and/or fruits are refrozen. The warm batter coating composition might slightly de-freeze the vegetables and/or fruits. These are preferably refrozen to improve storage and shelf life time.

In an embodiment, any type of fruit or vegetable is suitable to be used in the present method. Preferably, the fruit or vegetable comprises a sufficient outer surface on which the coating can be applied. The method requires the fruit and vegetable to be precut, preferably this cutting step increases the outer surface of the fruit or vegetable on which the coating can be applied.

In an embodiment, the vegetables and/or fruits are chosen from parsnip, potatoes, apples, such as apple slices, beans, cabbage, zucchini, eggplants, carrots, mushrooms, onions, artichoke, corn cobs, asparagus, bell pepper, turnips, celery, and salsify.

In an embodiment, the pre-cut vegetables and/or fruit are blanched before the freezing of step a), preferably at a temperature of at least 72°C and a maximum of 97°C, for a minimum of 90 and a maximum of 240 seconds, and optionally subsequently dried.

This step ensure that the frozen vegetables and/or fruits have a soft core and may result in an improved color fixation and preservation of the fiber structure of the vegetable and/or fruit. This blanching step may be repeated as required, such as one, two, or three times. After the vegetables and/or fruits have been blanched, they can optionally be dried. Preferably this drying will take place in a drying tunnel.

In an embodiment, before freezing the vegetables and/or fruits in step a), the vegetables and/or fruits are peeled. If the vegetables and/or fruits are blanched before freezing, the peeling step preferably precedes the blanching step. Optionally, before peeling and/or before blanching, the fruits and/or vegetables are steamed as well.

Once all the steps of the method have been completed, the oven-bakeable frozen vegetables and/or fruits can be packaged. Typically, the products will be packaged in bags ranging from 150 to 1000 grams. Naturally, the respective frozen products can also be packaged in bulk, up to 1000 kilograms.

In a second aspect, the present invention relates to an oven-bakeable frozen vegetable or fruit provided with a coating layer, wherein the coating layer was applied by means of an enrober, and comprises one or more types of starch or flour and a vegetable fat composition comprising at least shea butter.

A person of ordinary skill in the art will appreciate that elements of the aspect of the method as described above return in the aspect of the oven-bakeable frozen vegetable or fruit of the invention. Consequently, all aspects of the present invention are related. All features and advantages and/or effects thereof as described in one of the aspects, as described above as well as below, can relate to any of these aspects, even if they are described in conjunction with a specific aspect. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

The coating layer of the oven-bakeable frozen vegetable or fruit of the present invention comprises one or more types of starch or flour and a vegetable fat composition comprising at least shea butter. A person skilled in the art will understand that the types of starch or flour as described above, and the fat composition comprising at least shea butter can be as described above in any one of the embodiments.

In an embodiment, the coating layer of the oven-bakeable frozen vegetable or fruit layer constitutes 5 to 20 wt%, preferably 7.5 to 17,5 wt%, more preferably 10 to 15 wt% of the oven-bakeable frozen vegetable or fruit.

In an embodiment, the coating layer does not contain palm fats, hydrogenated fats, and/or lauric fats.

In an embodiment, the coating layer comprises a sweetener, such as honey, sugar, maple syrup, agave nectar, molasses, brown sugar, fruit juices or purees, date syrup, coconut sugar, stevia, or malt extract, or a combination thereof.

In an embodiment, any type of fruit or vegetable is suitable. Preferably, the fruit or vegetable comprises a sufficient outer surface on which the coating layer is applied. The fruit and vegetable may be precut, preferably this cutting step increases the outer surface of the fruit or vegetable on which the coating layer is applied.

In an embodiment, the vegetable and/or fruit is chosen from parsnip, potatoes, apples, such as apple slices, beans, cabbage, zucchini, eggplants, carrots, mushrooms, onions, artichoke, corn cobs, asparagus, bell pepper, turnips, celery, and salsify.

In an embodiment, the oven-bakeable frozen vegetable or fruit is obtained by the method as described in any one of the previous embodiments.

The invention is further described by the following non-limiting examples which further illustrate the invention, and are not intended to, nor should they be interpreted to, limit the scope of the invention.

### EXAMPLE

To illustrate the method for producing oven-bakeable frozen vegetables and/or fruits, we present an example using parsnips as the chosen vegetable. It must be noted that this is a non-limiting example and that further vegetables and/or fruits may be used to replace parsnip. This example demonstrates the practical implementation of the method, highlighting its advantages.

### Example 1: Production of Oven-Bakeable Crispy Parsnips

### Method

### Step 1: Pre-cutting and optional Blanching

Fresh parsnips are cleaned, peeled, and pre-cut into suitable sizes for consumption. The cutting process aims to increase the outer surface area available for the batter coating. The pre-cut parsnips are optionally blanched in hot water at a controlled temperature between 72°C and 97°C for a duration of 90 to 240 seconds. This blanching step softens the core of the parsnips, improves color fixation, and preserves the fiber structure. After blanching, excess moisture is optionally removed through drying in a tunnel.

### Step 2: Freezing

The cut, and optionally blanched and dried parsnips are rapidly frozen to create the desired frozen state. This freezing step ensures the parsnips are in a suitable condition for the subsequent coating process.

### Step 3: Coating with Batter Composition

In a controlled environment, a batter composition is prepared. The batter composition consists of one or more types of starch or flour and a fat composition, preferably vegetable fat composition, comprising shea butter. As an example, the fat composition may comprises 65 g saturated fatty acids, 32 g mono unsaturated fatty acids, 3 g poly unsaturated fatty acids, and a maximum of 1.5 g trans fatty acids per 100 g of fat. The batter composition further comprises at least honey as sweetener. The temperature of the batter composition is maintained between 38°C and 55°C to keep it in a liquid state.

The frozen parsnips are passed through an enrober where they are coated with a layer of the batter composition, constituting between 5 and 20 wt% of the final coated parsnip pieces. The controlled temperature of the batter ensures it adheres well to the frozen parsnip, as the batter composition solidifies immediately on the surface of the frozen parsnip when it touches the cold vegetable. This is because the batter coating composition as well as the fat composition have a melting point of between 36 °C and 38 °C as measured by AOCS Cc 3-25.

### Step 4: Refreezing (Optional)

The coated parsnips can optionally undergo a refreezing step to improve their storage and shelf life.

### Step 5: Packaging

The oven-bakeable coated parsnips are packaged in consumer-friendly portions, typically in bags ranging from 150 to 1000 grams. Alternatively, bulk packaging of up to 1000 kilograms is also an option.

The oven-bakeable coated parsnips are subsequently baked in a traditional oven at 220°C for about 25 to 30 minutes.

### Advantages and Outcomes

This example showcases the successful application of the method, resulting in oven-bakeable parsnips that are very crunchy after baking in an oven, without the need for deep frying, and while maintaining their own original taste, with the following advantages:
*Crispy Texture:* The parsnips achieve optimal crispiness when baked in an oven without the need for deep frying.
*Flavor Preservation:* The natural flavor of the parsnips is preserved, providing a delightful taste experience.
*Adhesion and No Dripping:* The controlled temperature during the coating process ensures excellent adhesion of the batter composition without any dripping, minimizing waste, as the coating immediately solidifies on the surface of the frozen vegetable pieces.
*Healthier Profile:* The exclusion of palm fats, hydrogenated fats, and lauric fats in the batter composition contributes to a healthier fat profile.
*Sustainable Shea Butter:* The use of shea butter in the fat composition offers environmental sustainability and numerous health benefits.
*Safety:* The method's controlled temperature of the coating at between 38°C and 55°C reduces the risk of burn injuries during the coating process.

This example demonstrates the versatility and effectiveness of the method for producing oven-bakeable frozen vegetables and/or fruits, emphasizing its practical application and the multiple advantages it offers to both producers and consumers.

It is clear that the method according to the invention, and its applications, are not limited to the presented examples.

## Claims

1. A method for producing oven-bakeable frozen vegetables and/or fruits, comprising the steps of:
a) freezing pre-cut vegetables and/or fruits, and
b) passing the frozen vegetables and/or fruits through a curtain of batter coating composition produced by means of an enrober, thereby providing a coating layer on the frozen vegetables and/or fruits,
wherein the batter coating composition comprises one or more types of starch or flour, and a fat composition comprising shea butter, and wherein the batter coating composition in step b) is at a temperature of at least 38 °C and a maximum of 55 °C.

2. The method according to claim 1, wherein the batter coating composition in step b) is at a temperature of at least 40 °C and a maximum of 50 °C.

3. The method according to claim 1 or 2, wherein the batter coating composition and/or the fat composition has a melting point of between 36 °C and 38 °C, preferably of about 37 °C, as measured by AOCS Cc 3-25.

4. The method according to any one of the previous claims, wherein the coating layer constitutes 5 to 20 wt%, preferably 10 to 15 wt% of the oven-bakeable frozen vegetables or fruits.

5. The method according to any one of the previous claims, wherein the batter coating composition does not contain palm fats, hydrogenated fats, and/or lauric fats.

6. The method according to any one of the previous claims, wherein the batter coating composition comprises one or more types of starch or flour and a fat composition in a ratio 1:100 to 100:1.

7. The method according to any one of the previous claims, wherein the fat composition comprises per 100 grams of fat, 65 g saturated fatty acids, 32 g mono unsaturated fatty acids, 3 g poly unsaturated fatty acids, and/or maximum 1.5 g trans fatty acids.

8. The method according to any one of the previous claims, further comprising a step c) wherein the coated vegetables and/or fruits are refrozen.

9. The method according to any one of the previous claims, wherein the vegetables are parsnip.

10. The method according to any one of the previous claims, wherein the pre-cut vegetables and/or fruit are blanched before freezing at a temperature of at least 72°C and a maximum of 97°C, for a minimum of 90 and a maximum of 240 seconds, and optionally subsequently dried.

11. An oven-bakeable frozen vegetable or fruit provided with a coating layer, obtained by the method according to any of the claims 1 to 10, wherein the coating layer was applied by means of an enrober, and comprises one or more types of starch or flour and a vegetable fat composition comprising at least shea butter.

12. The oven-bakeable frozen vegetable or fruit according to claim 11, wherein the coating layer constitutes 5 to 20 wt%, preferably 10 to 15 wt% of the oven-bakeable frozen vegetable or fruit.

13. The oven-bakeable frozen vegetable or fruit according to any one of the claims 11 or 12, wherein the coating layer does not contain palm fats, hydrogenated fats, and/or lauric fats.

14. The oven-bakeable frozen vegetable or fruit according to any one of the claims 11 to 13, wherein the vegetable is parsnip.

## Patentansprüche

1. Verfahren zur Herstellung von im Ofen backfähigem, tiefgekühltem Gemüse und/oder Obst, die folgenden Schritte umfassend:
a) Tiefkühlen vorgeschnittenen Gemüses und/oder Obsts und
b) Führen des tiefgekühlten Gemüses und/oder Obsts durch einen Vorhang aus einer Backteigüberzugszusammensetzung, die mittels einer Überziehanlage hergestellt wird, wodurch eine Überzugsschicht auf dem tiefgekühlten Gemüse und/oder Obst bereitgestellt wird,
wobei die Backteigüberzugszusammensetzung eine oder mehrere Arten von Stärke oder Mehl und eine Fettzusammensetzung umfasst, die Sheabutter umfasst, und wobei die Backteigüberzugszusammensetzung in Schritt b) eine Temperatur von mindestens 38°C und höchstens 55°C aufweist.

2. Verfahren nach Anspruch 1, wobei die Backteigüberzugszusammensetzung in Schritt b) eine Temperatur von mindestens 40°C und höchstens 50°C aufweist.

3. Verfahren nach Anspruch 1 oder 2, wobei die Backteigüberzugszusammensetzung und/oder die Fettzusammensetzung einen Schmelzpunkt zwischen 36°C und 38°C aufweisen, vorzugsweise von etwa 37°C, gemessen anhand von AOCS Cc 3-25.

4. Verfahren nach einem der vorhergehenden Ansprüche, wobei die Überzugsschicht 5 bis 20 Gew.-% des im Ofen backfähigen, tiefgekühlten Gemüses oder Obsts ausmacht, vorzugsweise 10 bis 15 Gew.-%.

5. Verfahren nach einem der vorhergehenden Ansprüche, wobei die Backteigüberzugszusammensetzung keine Palmfette, keine gehärteten Fette und/oder keine laurinsäurehaltigen Fette enthält.

6. Verfahren nach einem der vorhergehenden Ansprüche, wobei die Backteigüberzugszusammensetzung eine oder mehrere Arten von Stärke oder Mehl und eine Fettzusammensetzung in einem Verhältnis von 1:100 bis 100:1 umfasst.

7. Verfahren nach einem der vorhergehenden Ansprüche, wobei die Fettzusammensetzung pro 100 Gramm Fett 65 g gesättigte Fettsäuren, 32 g einfach ungesättigte Fettsäuren, 3 g mehrfach ungesättigte Fettsäuren und/oder maximal 1,5 g Transfettsäuren umfasst.

8. Verfahren nach einem der vorhergehenden Ansprüche, ferner einen Schritt c) umfassend, in dem das überzogene Gemüse und/oder Obst erneut tiefgekühlt wird.

9. Verfahren nach einem der vorhergehenden Ansprüche, wobei das Gemüse Pastinake ist.

10. Verfahren nach einem der vorhergehenden Ansprüche, wobei das vorgeschnittene Gemüse und/oder Obst vor dem Tiefkühlen bei einer Temperatur von mindestens 72°C und maximal 97°C mindestens 90 und maximal 240 Sekunden lang blanchiert und optional nachfolgend getrocknet wird.

11. Tiefgekühltes, im Ofen backfähiges Gemüse oder Obst, versehen mit einer Überzugsschicht, erzielt durch das Verfahren nach einem der Ansprüche 1 bis 10, wobei die Überzugsschicht mittels einer Überziehanlage aufgebracht wurde und eine oder mehrere Arten von Stärke oder Mehl und eine Pflanzenfettzusammensetzung umfasst, welche mindestens Sheabutter umfasst.

12. Tiefgekühltes, im Ofen backfähiges Gemüse oder Obst nach Anspruch 11, wobei die Überzugsschicht 5 bis 20 Gew. % des im Ofen backfähigen, tiefgekühlten Gemüses und/oder Obsts ausmacht, vorzugsweise 10 bis 15 Gew.-%.

13. Tiefgekühltes, im Ofen backfähiges Gemüse oder Obst nach einem der Ansprüche 11 oder 12, wobei die Überzugsschicht keine Palmfette, keine gehärteten Fette und/oder keine laurinsäurehaltigen Fette enthält.

14. Tiefgekühltes, im Ofen backfähiges Gemüse oder Obst nach einem der Ansprüche 11 bis 13, wobei das Gemüse Pastinake ist.

## Revendications

1. Procédé de production de légumes et/ou de fruits congelés pouvant être cuits au four, comprenant les étapes consistant à:
a) congeler des légumes et/ou des fruits prédécoupés, et
b) faire passer les légumes et/ou les fruits congelés à travers un rideau de composition d'enrobage de pâte à frire produit au moyen d'une enrobeuse, de manière à obtenir une couche d'enrobage sur les légumes et/ou les fruits congelés,
dans lequel la composition d'enrobage de pâte à frire comprend un ou plusieurs types d'amidon ou de farine, et une composition de matière grasse comprenant du beurre de karité, et dans lequel la composition d'enrobage de pâte à frire à l'étape b) est à une température d'au moins 38°C et d'au maximum 55°C.

2. Procédé selon la revendication 1, dans lequel la composition d'enrobage de pâte à frire à l'étape b) est à une température d'au moins 40°C et d'au maximum de 50°C.

3. Procédé selon la revendication 1 ou 2, dans lequel la composition d'enrobage de pâte à frire et/ou la composition de matière grasse a un point de fusion compris entre 36°C et 38°C, de préférence d'environ 37°C, tel que mesuré par AOCS Cc 3-25.

4. Procédé selon l'une quelconque des revendications précédentes, dans lequel la couche d'enrobage constitue 5 à 20% en poids, de préférence 10 à 15% en poids des légumes ou fruits congelés pouvant être cuits au four.

5. Procédé selon l'une quelconque des revendications précédentes, dans lequel la composition d'enrobage de pâte à frire ne contient pas de graisses de palme, de graisses hydrogénées, et/ou de graisses lauriques.

6. Procédé selon l'une quelconque des revendications précédentes, dans lequel la composition d'enrobage de pâte à frire comprend un ou plusieurs types d'amidon ou de farine et une composition de matière grasse dans un rapport de 1:100 à 100:1.

7. Procédé selon l'une quelconque des revendications précédentes, dans lequel la composition de matière grasse comprend pour 100 grammes de matière grasse, 65 g d'acides gras saturés, 32 g d'acides gras mono-insaturés, 3 g d'acides gras poly-insaturés et/ou au maximum 1,5 g d'acides gras trans.

8. Procédé selon l'une quelconque des revendications précédentes, comprenant en outre une étape c) dans laquelle les légumes et/ou fruits enrobés sont recongelés.

9. Procédé selon l'une quelconque des revendications précédentes, dans lequel les légumes sont du panais.

10. Procédé selon l'une quelconque des revendications précédentes, dans lequel les légumes et/ou fruits prédécoupés sont blanchis avant d'être congelés à une température d'au moins 72°C et d'au maximum 97°C, pendant un minimum de 90 et un maximum de 240 secondes, et éventuellement séchés ensuite.

11. Légume ou fruit congelé pouvant être cuit au four pourvu d'une couche d'enrobage, obtenu par le procédé selon l'une quelconque des revendications 1 à 10, dans lequel la couche d'enrobage a été appliquée au moyen d'une enrobeuse, et comprend un ou plusieurs types d'amidon ou de farine et une composition de matière grasse végétale comprenant au moins du beurre de karité.

12. Légume ou fruit congelé pouvant être cuit au four selon la revendication 11, dans lequel la couche d'enrobage constitue 5 à 20% en poids, de préférence 10 à 15% en poids du légume ou du fruit congelé pouvant être cuit au four.

13. Légume ou fruit congelé pouvant être cuit au four selon l'une quelconque des revendications 11 ou 12, dans lequel la couche d'enrobage ne contient pas de graisses de palme, de graisses hydrogénées, et/ou de graisses lauriques.

14. Légume ou fruit congelé pouvant être cuit au four selon l'une quelconque des revendications 11 à 13, dans lequel le légume est du panais.
